(19) Europäisches Patentamt / European Patent Office / Office européen des brevets

(11) **EP 2 004 563 B1**

(12) **EUROPEAN PATENT SPECIFICATION**

(45) Date of publication and mention
of the grant of the patent:
**02.01.2019 Bulletin 2019/01**

(21) Application number: **07726834.0**

(22) Date of filing: **13.03.2007**

(51) Int Cl.:
*C03C 17/42* (2006.01)   *C03C 17/02* (2006.01)
*C03C 17/04* (2006.01)   *C03C 17/00* (2006.01)

(86) International application number:
**PCT/EP2007/052328**

(87) International publication number:
**WO 2007/104752 (20.09.2007 Gazette 2007/38)**

(54) **COATED GLASS SHEET**

BESCHICHTETE GLASSCHEIBE

PLAQUE DE VERRE TRAITÉE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **13.03.2006 EP 06111034
11.09.2006 EP 06120436**

(43) Date of publication of application:
**24.12.2008 Bulletin 2008/52**

(73) Proprietor: **AGC Glass Europe
1348 Louvain-la-Neuve (BE)**

(72) Inventors:
• **SCARSO, Florent
B-6040 Jumet (BE)**
• **BOUESNARD, Olivier
B-6040 Jumet (BE)**
• **JACOBS, Nadia
B-6040 Jumet (BE)**

(74) Representative: **Bayot, Daisy et al
AGC Glass Europe
Technovation Centre
IP Department
Rue Louis Blériot, 12
6041 Gosselies (BE)**

(56) References cited:
**EP-A- 0 695 727      WO-A-99/33906
DE-T2- 69 213 774   DE-U1- 20 315 625
US-A- 3 937 853       US-A1- 2002 132 871
US-B1- 6 544 587**

**Description**

The present invention relates to coated glass sheets, in particular glass sheets with a lacquer layer formed on a surface thereof, and to such glass sheets which are heat treatable and which may be handled before such possible heat treatment. By "lacquer layer" we mean herein paint, enamel, lacquer or other type of decorative coloured layers.

Glass sheets according to this invention may have various applications. Lacquered glass sheets may for example be used for decorative purpose, in furniture, wardrobes, as doors for furniture, as partitions, in tables, shelves, in bathrooms, in shops displays, as wall covering, as spandrels,... Such lacquer may also be used on automotive glazing panels, or at least on portions of these glazing, for example on the peripheral portions of windscreen. More and more of these applications necessitate tempered glass sheets as tempered glass sheets have the advantage of being more resistant to breakage. Other heat treatments are also becoming often used: bending, for example.

Conventionally, lacquered glass sheets may be produced according to various processes.

In one known process, a glass sheet is covered with a layer of organic based paint which is then dried and baked in an oven, for example at around 150°C for about 10 minutes. The organic based paint may comprise, for example, a polyurethane resin, an alkyd resin, or an acrylic resin. Before applying the paint layer, the glass may be treated with a silane. When conventional lacquered glass sheets covered with a layer of organic based paint are heat treated at high temperature, the lacquer burns, is deteriorated or may be completely destroyed. Such conventional lacquered glass sheets will generally not survive temperatures higher than 200°C without degradation. When the glass sheet is tempered before it is lacquered, this necessitates that the glass sheet be already in its final dimension, since cutting and grinding a tempered glass sheet is not possible. This does not allow mass and continuous production.

In another known process, a glass sheet is covered with a layer of IR or UV curable enamel, is then heated, in a first step, at a temperature of around 150°C or UV cured and finally is heat treated at around 600°C. The first heating step provides limited mechanical resistance (Clemen test result is less than 50 g) to the coated glass sheet to allow it to be handled on the manufacturing line until it reaches the oven where the heat treatment occurs. Nevertheless the first step does not give a mechanical and water resistance sufficient for the coated glass sheet to be resistant to transport, by truck for example, to be cut, to be edge worked or to be stocked, before heat treatment. It is necessary for such conventional enamelled glass to be heat treated immediately after production and on the same production line.

DE 203 15 625 U1 discloses a glass tile having a first coating of a colour-containing glaze precursor on top of which a second protective coating is applied. Both coatings are deposited by screen printing and are fired at a temperature of 700 °C.

Unless otherwise indicated, references to temperatures herein are references to oven temperatures, i.e. atmosphere temperatures, in which heating or heat treatment occurs.

According to one of its aspects, the present invention provides a glass sheet as defined by claim 1. Other claims define preferred and/or alternative aspects of the invention.

According to this aspect, coated glass sheets may comprise in order, a first layer comprising an enamel and a second layer comprising a resin.

This may provide advantageous mechanical resistance properties before heat treatment. Glass sheets according to the invention may be handled and transported before heat treatment without damaging the coating, for example without creating scratches. They may be cut and ground before heat treatment without causing the coating to peel off or to be damaged at the borders of the cutting line. Furthermore they offer, before heat treatment, a good resistance under running water avoiding the peeling off or destruction of the coating when, for example, washing the glass sheets or edge working. Glass sheets according to present invention, before heat treatment, may advantageously offer good properties in terms of mechanical resistance. In particular a glass sheet according to the present invention, before heat treatment, may show no visible scratch, viewed from the glass side, at 350 g or 400 g, preferably at 500 g or 650 g, more preferably at 700 g or 750 g and still more preferably at 800 g or 1000 g under the Clemen test (according to ISO 1518-1992).

The present invention has particular advantages in relation to heat treatable glass sheets. The term "heat treatable glass sheet" as used herein means that the lacquered glass sheet is adapted to undergo a bending and/or thermal tempering and/or thermal hardening operation and/or other comparable heat treatment process without creating defects (e.g. aesthetical defects in the lacquer) and having still a good adhesion between the glass sheet and the lacquer. Such heat treatment processes may involve heating or exposing the glass sheet carrying the lacquer to a temperature greater than about 560°C, for example, between 560°C and 750°C in the atmosphere, for between 2 minutes and 20 minutes, preferably for maximum 15 minutes, depending on the thickness of the glass sheet and the oven used.

Glass sheets according to present invention, once heat treated, may furthermore advantageously offer similar properties to conventional non heat treated lacquered glass in terms of adhesion of the coating to the glass, chemical resistance, mechanical resistance and glue resistance. In particular a glass sheet according to the present invention may present one or more of the following properties, at least once heat treated:

| Opacity | Luminous transmittance<5%, preferably <1%, more preferably <0.1% |
|---|---|
| Clemen test (according to ISO 1518-1992) | No visible scratch at 1000g, preferably at 2000g, more preferably at 3000g |
| UV test (according to standard ASTM G53-88, without water, at 60°C, by continuous irradiation UVA 340nm) | No colour change ($\Delta$E*<2) after 1000h - 300W |
| Condensation test (according to standard DIN 50 017 / 40°C / 98% relative humidity / 20 days) | No blistering<br>No colour change ($\Delta$E*<2) |
| Glue resistance (immersion in water at 35°C of glass samples with blobs of glue on the coated side, during 20 days) | No marks of glues visible on the glass side with acetic, alkoxy and oxime glues Good adhesion, no separation |

The Clemen test, the UV test and the condensation test are all described hereunder.

Preferably, glass sheets according to the invention comprise, in order, the glass sheet, the first layer comprising an enamel and then the second layer comprising a resin. This order may provide particularly good mechanical resistance properties. For similar reasons, the second layer comprising a resin may advantageously be the last coating of the stack of layers, i.e. be exposed to air.

Preferably, the first layer is in direct contact with the glass substrate. Alternatively, an adhesion promoter may be present between the glass and the coating to improve the adhesion of the coating to the glass. This adhesion promoter may comprise silane. Advantageously, the second layer is in direct contact with the first layer, but here again an adhesion promoter may be present between the first layer and the second layer.

Such preferred structures may provide particularly good mechanical resistance properties for transportation, for cutting and grinding, and for resistance under running water prior to any heat treatment.

The first layer of the invention comprises an enamel, and preferably consists essentially of an enamel. This may ensure adequate adhesion of the coating to the glass sheet. The term "enamel" is used herein equally for an enamel composition before any drying or heat treatment, an enamel composition which is dried but not yet sinterised, and enamel after heat treatment, which is sinterised. Enamels comprise generally a powder made of a glass frit and pigments, and a medium. The medium ensures that the solid particles are in correct suspension and allows application and temporary adhesion of the enamel to the substrate. The medium may be organic and contain UV- or IR- crosslinkable elements. Preferably the medium comprised in the enamel of the first layer is organic and is curable under infrared radiation. This may improve the resistance of the coating under running water (preferably no peeling and/or no dissolution). The thickness of the first layer, once dried and before heat treatment, may be greater than or equal to 5, 10, 20, 30, 40, 50 or 60 $\mu$m; it may be less than or equal to 150, 130, 120, 110, 100, 80 or 70 $\mu$m. Examples of enamels adapted to form the first layer are enamel 144001 black 801029 from the company FERRO, enamel AF2600-65-96 from the company JOHNSON MATTHEY and enamel TEMPVER bianco 3400-06-011 from the company FENZI.

References to layers thicknesses herein are references to the mean geometrical thickness of the layer.

In a preferred embodiment, the first layer of the invention may be continuous and extend over substantially the whole surface of the glass sheet, i.e. over more than 90% of the surface of the glass sheet, preferably over more than 95% of the surface of the glass sheet. Preferably, the first layer of the invention may be covered substantially over its whole surface by the second layer, i.e. over more than 90% of its surface, preferably over more than 95% of its surface.

The second layer of the invention comprises a resin. This may protect the coating from water and scratches. It may be a paint, a binder, a varnish or a glue. It may also be a medium, i.e. a medium that could be used in an enamel composition but which would not be associated with frit and pigments. Alternatively, it may be a "clear coat" i.e. a paint without fillers (fillers may also be named extenders).

The resin of the second layer may be a UV curable resin or a IR curable resin.

In the case where a UV curable resin is used, in a preferred embodiment, it may comprise a polyester resin. The thickness of the second layer, once dried and before heat treatment, may be greater than or equal to 5 or 10 $\mu$m; it may be less than or equal to 50, 30 or 20 $\mu$m. If the thickness of the second layer is too low, it may not adequately protect the first layer in terms of mechanical and water resistance; if it is too high, the crosslinking may not be good and detachments may occur. Examples of UV curable resins are: UV glue LOCTITE, UV medium MS105 from Johnson Matthey and UV paint comprising polyester from Green Isolight International (for example G11206, G11207) with, optionally, addition of carbon black.

Alternatively, in the case where an IR curable resin is used, the IR curable resin may comprise at least one material selected from the group consisting of alkyds, acrylic, acrylamide, acrylic-styrene, vinyl-acrylic, urethane, polyurethane, polyester, urethane alkyds, amino resins, polyamide, epoxy, epoxy ester, phenolic resins, silicon resins, PVC, PVB, and water-based resins. The thickness of the second layer, once dried and before heat treatment, may be greater than or equal to 3 , 5, 10, 15, 20 or 25 $\mu$m; it may be less than or equal to 80, 70, 60, 55 or 50 $\mu$m. If the thickness of the second layer is too low, it may not adequately protect the first layer in terms of mechanical and water resistance; if it is too high, it may influence the colour of the first layer and show spots of different colours after final heat treatment. Examples of materials which may be suitable for the second layer of the invention are: SK1825 paint from the company VALSPAR, which comprises a methacrylic resin associated with an aminoplaste resin of the type melamine-formaldehyde; green top coat AW paint for mirror from the company FENZI, which comprises an orthophtalic alkyd resin associated with an aminoplaste resin of the type melamine-formaldehyde; paint from FENZI comprising acrylic and epoxydic resins; polyurethane paint from FENZI; an example of clearcoat is the SK1825 paint from the company VALSPAR which has been centrifuged to exclude the fillers.

The second layer of the invention comprises a resin and fillers of enamel, preferably it consists essentially of a resin and fillers of enamel. By "fillers of enamel", we mean the portion of an enamel which is not organic, i.e. the frit. Examples of this embodiment include: (i) a second layer consisting essentially of a polyester resin in which the initial fillers were removed by centrifugation and in which a filler of enamel, e.g. frit of enamel, is added, and (ii) a second layer consisting essentially of a clear coat and frit of enamel.

The addition of inorganic fillers may allow a reduction in the amount of organic material present in the second layer, thereby allowing the organic portion of the layer to burn more gently during heat treatment and reducing or avoiding the risk of detachment between second and first layers and first layer and glass. Preferably, these inorganic fillers are fillers of enamel, such that with heat treatment those fillers sinterise forming a second layer of sinterised enamel above the first layer of sinterised enamel.

It has also been discovered that use of an IR curable paint comprising inorganic fillers that are not fusable at temperature of final heat treatment as the material comprising the resin for the second layer of the invention may have a disadvantage: a powder, which is not adherent to the coated glass sheet, may appear after heat treatment. It may be easily washed with water, possibly with water under high pressure, but of course this adds a step to the process for obtaining a heat treated coated glass sheet, which may be time consuming and necessitate investment in new machinery. We discovered that the use of fillers of enamel in the second layer of the invention may reduce or avoid the appearance of a non adhering powder on the coated glass sheet after heat treatment, as those fillers will fuse during heat treatment on the first layer.

The quantity of fillers of enamel in the second layer, measured on the final product before heat treatment is from 20% to 60% by weight, it may preferably be greater than or equal to 20, 30, 35 or 40 % by weight; it may be less than or equal to 60 or 50 % by weight.

Examples of fillers of enamels adapted to be incorporated in the second layer are: 144001, 14251, 14252, 14253 et 14054 from FERRO; 1T1415, 1T1430, 1T1035, AF2000, AF2600, GB980BF, NK019, GB543AF from JOHNSON MATTHEY; fillers of TEMPVER enamel from FENZI.

For decorative purposes, the coating may be coloured. The colour given to the coating may be given by the first layer or by the second layer or by both layers acting together. Opacity is also function of the first layer or the second layer or both layers acting together. For example, to give a black colour to the product, a black enamel may be used for the first layer and a clear resin for the second layer. If the glass sheet is heat treated, colour may change during heat treatment, depending on the composition of the layers. If this occurs, this should be taken into account on the heat treatable product, to ensure that the final colour, after heat treatment, is as desired.

The glass substrate used may be flat glass, in particular float glass of various thicknesses (between 1.8 and 10.2 mm, for example); it may be soda lime glass and may be clear, extra-clear, coloured, etched or sand-blasted glass. Glass sheets according to the invention may have a size greater than 1m x 1m. They may have sizes, known as PLF, of for example 3.21m x 6m or 3.21m x 5.50m or 3.21m x 5.10m or 3.21m x 4.50m or sizes, known as DLF, of for example 3.21m x 2.50m or 3.21m x 2.25m.

A method not according to the invention may comprise the following steps, in the order recited:

- providing a glass sheet;
- applying a first layer comprising, more preferably consisting of, an enamel on a surface of the glass sheet, preferably at a thickness of between 30 and 300 $\mu$m, preferably between 70 and 200 $\mu$m in liquid state;
- curing the first layer under UV or IR radiation, depending on the nature of the enamel, so that the enamel is dried, i.e. the major part of the organic portion is evaporated or crosslinked, e.g. solvents are evaporated, and sticks to the glass but is not yet substantially fused or sinterised. Preferably, an IR curable enamel is used and is dried at a temperature not exceeding 250°C, preferably not exceeding 200°C; this may take around 1 to 15 minutes, preferably 2 to 10 minutes (in a static oven); or, in an industrial oven, this may take around 7 minutes with a maximum temperature measured on the glass of around 220-240°C;
- applying a second layer comprising a resin, preferably at a thickness of between 20 and 150 $\mu$m in liquid state; and

- curing the second layer under UV or IR radiation, depending on the nature of the resin. Under UV radiation this may take a few seconds and at most around 5 minutes; under IR radiation, this may take a few seconds and at most around 20 minutes (in a static oven), at a temperature between 130 and 200°C.

Both layers may be applied by any method known in the art, for example the processes of roller coating or curtain coating, the spray process or flow process. The screen printing method may also be used, especially if only portions of the glass sheet are to be coated.

When a glass sheet is heat treated, the first layer fuses and sinterises and the second layer may be partially removed or totally destroyed. Generally speaking, when the second layer consists essentially of a resin, i.e. no inorganic filler is present in the second layer, this layer may be destroyed; when inorganic fillers, which are not from enamel, are present in the second layer, detached particles (e.g. a powder) coming from the second layer may be present at the surface of the first layer, but are washable; when fillers of enamel are present in the second layer, those fillers fuse and sinterise, forming a second layer of sinterised enamel above the first layer of sinterised enamel.

Preferably, a glass sheet according to the invention, once thermally toughened may be used as safety glass in buildings, in accordance with the standard EN12150-1:2000. Preferably, a glass sheet according to the invention, once thermally toughened breaks according to the fragmentation test of standard prEN14-179-1:2001 or EN1863-1:2000.

Embodiments of the invention will now be further described, by way of examples only.

Example 1

A sheet of glass is conveyed along a path by a roller conveyor. It is first washed in the normal manner. It then passes under a curtain coater where it is covered with a white enamel. The coating is dried at moderated temperature, at around 150°C, during 15 minutes. The glass sheet passes then under a roller coater where a UV curable resin comprising a polyester resin from the company Green Isolight International (GII207) wherein carbon black was added, is applied on the first layer of enamel. This second layer is cured directly after the application, in a UV oven during less than 1 minute, preferably less than 30 seconds. Two embodiments were realised, one with 8% by weight of carbon black, the other with 40% by weight of carbon black. Both showed similar results.

Thickness of the first layer, once dried and before heat treatment, is 43 $\mu$m and thickness of the second layer, once dried and before heat treatment, is 13 $\mu$m. The final product before heat treatment shows a water resistance under running water which is good. Adherence of the coating to the glass is good; this may allow good grinding without defects on the edges. Scratch resistance is good: no scratches detected with the Clemen test under a weight of 1000g.

The final product after heat treatment is white with good opacity (luminous transmittance less than 1%). No colour change is detected after the UV test, and no blistering is visible after the condensation test.

Example 2

A sheet of glass is conveyed along a path by a roller conveyor. It is first washed in the normal manner. It then passes under a curtain coater where it is covered with a white enamel TEMPVER bianco 3400-06-011 from the company FENZI. The coating is dried at moderated temperature, at a temperature measured on the glass of around 220°C, during 8 minutes. The glass sheet then passes under a curtain coater where a polyurethane varnish SK1690 from the company Valspar is applied on the first layer of enamel. No filler of enamel is added to the resin. This second layer, of a thickness of around 30 $\mu$m at liquid state, is then dried directly after the application, in a tunnel oven, at a temperature measured on the glass of around 140°C and during approximately 7 minutes.

Thickness of the first layer, once dried and before heat treatment, is between 50-60 $\mu$m and thickness of the second layer, once dried and before heat treatment, is between 10-15 $\mu$m. The final product before heat treatment shows a Clemen test result where no scratches are detected under a weight of 500g.

Example 3

The SK1825 paint from the company VALSPAR, which comprises a methacrylic resin associated with an aminoplaste resin of the type melamine-formaldehyde, is centrifuged in a centrifuge Allegra 25R from the company Beckman-Coulter at 20°C during 1 hour and a half at 13000 rpm. The fillers present in the initial paint are removed. Fillers 1T1415 of a JOHNSON MATTHEY enamel are then added in the paint without fillers in a quantity of 40% by weight.

A sheet of glass is first washed in the normal manner. It is then covered, using a bar coater, with a black enamel 144001 black 801029 from the company FERRO, at a thickness of around 150 $\mu$m in liquid state. The coating is dried at moderate temperature, at around 150°C, during 15 minutes. The centrifuged SK1825 paint including fillers 1T1415 of a JOHNSON MATTHEY enamel is then applied with a bar coater on the first layer of enamel. This second layer, having a thickness of around 60 $\mu$m in liquid state, is then dried directly after the application, in a static oven during 20 minutes at around 200°C.

The final product before heat treatment shows a water resistance under running water which is good. Adherence of the coating to the glass is good; this may allow good grinding without defects on the edges. And the scratch resistance is good: no scratches visible when looking through the glass with the Clemen test under a weight of 500g.

The final product after heat treatment is black with good opacity (luminous transmittance less than 1%). Scratch resistance is good: no scratches detected with the Clemen test under a weight of 3000g. No colour change is detected after the UV test or after the condensation test. Resistance to glues is good: no separation and no marks of glues visible on the glass side

Example 4

The green top coat AW paint for mirror from the company FENZI, which comprises an orthophtalic alkyd resin associated with an aminoplaste resin of the type melamine-formaldehyde, is centrifuged in a centrifuge Allegra 25R from the company Beckman-Coulter at 20°C during 1 hour and a half at 13000 rpm. The fillers present in the initial paint are removed. Fillers 1T1415 of a JOHNSON MATTHEY enamel are then added in a quantity of 70% by weight.

A sheet of glass is first washed in the normal manner. It is then covered, using a bar coater, with a white enamel TEMPVER bianco 3400-06-011 from the company FENZI, at a thickness of around 150 $\mu$m in liquid state. The coating is dried at moderated temperature, at around 150°C, during 15 minutes. The centrifuged green top coat AW paint including fillers 1T1415 of a JOHNSON MATTHEY enamel is then applied with a bar coater on the first layer of enamel. This second layer, having a thickness of around 60 $\mu$m in liquid state, is then dried directly after the application, in a static oven during 20 minutes at around 200°C.

The final product before heat treatment shows a water resistance under running water which is good. Adherence of the coating to the glass is good; this may allow good grinding without defects on the edges. And the scratch resistance is good: no scratches visible when looking through the glass with the Clemen test under a weight of 500g.

The final product after heat treatment is white with good opacity (luminous transmittance less than 1%). Scratch resistance is good: no scratches detected with the Clemen test under a weight of 3000g. No colour change is detected after the UV test or after the condensation test. Resistance to glues is good: no separation and no marks of glues visible on the glass side.

Example 5

A sheet of glass is first washed in the normal manner. It is then covered, using a curtain coater, with a white enamel TEMPVER bianco 3400-06-011 from the company FENZI, in a quantity of 220g/m$^2$ (which gives a thickness, once dried, of 60 $\mu$m). The coating is dried at moderated temperature, at a temperature measured on the glass of around 220°C, during 7 minutes. A polyurethane paint from the company FENZI including 40% by weight of fillers 1T1415 of a JOHNSON MATTHEY enamel is then applied with a bar coater on the first layer of enamel. This second layer is then dried directly after the application.

Two series of samples were evaluated, with different thicknesses for the second layer, one series with a thickness of 60 $\mu$m in liquid state, the other with a thickness of 30 $\mu$m in liquid state. This corresponds approximately to dried thicknesses before heat treatment respectively of 46 $\mu$m and 26 $\mu$m.

The Clemen test show no visible scratch under a weight of 1000g when the thickness was 60 $\mu$m in liquid state and no visible scratch under a weight of 500g when the thickness was 30 $\mu$m in liquid state. At both thicknesses, the Lucite test is very good; when viewed from the glass side or the coated side, the glass sheet may show no visible defect at 1000 cycles.

Same results are obtained if fillers 1T1415 are replaced by fillers AF2000 from JOHNSON MATTHEY.

The Clemen test is used to evaluate the scratch resistance of the coating. A tungsten carbide tipped needle is pressed onto the coating by applying a load on the needle. The needle is used to scratch the coating over a distance of about 60 mm. Several weights (from 250 g till 2500 g with an interval of 250 g) may be applied on the same sample with a certain distance between each of the scratches. Hence a series of parallel scratches may be made into the sample. Full details of this test are set out in International Standard ISO 1518-1992.

The UV test is used to simulate the deterioration caused by sunlight. Full details of this test are set out in ASTM Standard G53-88. Samples are exposed to ultraviolet light. The exposure conditions used herein are: UVA lamp at 340 nm; power of UV lamp: 300W; timing of the UV exposure: 1000 hours; temperature of UV exposure: 60°C; no condensation exposure was performed. No colour change should appear after the test, preferably the variation of colour $\Delta E^*$ should be less than 2. $\Delta E^*$ is calculated as follows: $\Delta E^* = \sqrt{(L^{*2}+a^{*2}+b^{*2})}$ where L* a* b* are measured on the CIElab scale.

The condensation test is used to assess the behaviour of the sample in humid ambient atmospheres and to pinpoint any defects of the protection of the samples against corrosion. Full details of this test are set out in the standard DIN50 017. The conditions used herein are: 98% relative humidity; temperature of 40°C; during 20 days. No blistering, i.e. local peeling off of the lacquer, should be visible after the test.

The Lucite test is used to evaluate the scratch resistance of the coating. The sample is sprinkled, on the coating side, with Lucite® 4F or 47G (a quarter of a tea spoon on a sample of 15 x 25 cm), and then covered with a piece of clear glass of 6mm thick (10 x 10 cm) on which a weight of 3,938 kg is placed. The assembly "upper glass and weight" is subjected to a backward and forward movement during 100 cycles and more.

**Claims**

1. Glass sheet having a coating provided on a surface thereof wherein the coating comprises in order from the glass a first layer comprising enamel and a second layer comprising a resin, wherein the second layer additionally comprises a frit and is in direct contact with the first layer, the amount of frit in this second layer, before heat treatment is from 20% to 60% by weight.

2. Glass sheet according to claim 1, wherein the first layer consist essentially of an enamel.

3. Glass sheet according to claim 1 or claim 2, wherein the first layer is in direct contact with the glass sheet.

4. Glass sheet according to any preceding claim, wherein the enamel of the first layer comprises an organic medium adapted to be cured under infrared radiation.

5. Glass sheet according to claim 1-4, wherein the second layer consist essentially of the resin and a frit.

6. Glass sheet according to any preceding claim, wherein the resin of the second layer is selected from the group consisting of UV curable resins and IR curable resins.

7. Glass sheet according to any preceding claim, wherein the resin of the second layer comprises at least one material of the group consisting of UV mediums, polyester resins, alkyds, acrylic, acrylamide, acrylic-styrene, vinyl-acrylic, urethane, polyurethane, polyester, urethane alkyds, amino resins, polyamide, epoxy, epoxy ester, phenolic resins, silicone resins, PVC, PVB and water-based resins.

8. Glass sheet according to any preceding claim, wherein the thickness of the first either UV or IR curable layer, once dried and before heat treatment, is in the range from 5 to 120 $\mu$m.

9. Glass sheet according to any preceding claim, wherein the thickness of the second layer, once dried and before heat treatment, is in the range from 5 to 50 $\mu$m.

10. Glass sheet according to any preceding claim, wherein the first layer extends over substantially the whole surface of the glass sheet and is covered substantially over its whole surface by the second layer.

**Patentansprüche**

1. Glasscheibe mit einer Beschichtung, die auf einer Oberfläche davon bereitgestellt wird, wobei die Beschichtung in der Reihenfolge von dem Glas aus eine erste Schicht, die Emaille umfasst, und eine zweite Schicht umfasst, die ein Harz umfasst, wobei die zweite Schicht zusätzlich eine Fritte umfasst und in direktem Kontakt mit der ersten Schicht ist, wobei die Menge der Fritte in dieser zweiten Schicht vor der Wärmebehandlung 20 Gew.% bis 60 Gew.% beträgt.

2. Glasscheibe nach Anspruch 1, wobei die erste Schicht im Wesentlichen aus einer Emaille besteht.

3. Glasscheibe nach Anspruch 1 oder Anspruch 2, wobei die erste Schicht in direktem Kontakt mit der Glasscheibe ist.

4. Glasscheibe nach einem der vorhergehenden Ansprüche, wobei die Emaille der ersten Schicht ein organisches Medium umfasst, das vorgesehen ist, um unter Infrarotstrahlung gehärtet zu werden.

5. Glasscheibe nach Anspruch 1 bis 4, wobei die zweite Schicht im Wesentlichen aus dem Harz und einer Fritte besteht.

**6.** Glasscheibe nach einem der vorhergehenden Ansprüche, wobei das Harz der zweiten Schicht ausgewählt ist aus der Gruppe bestehend aus UV-härtbaren Harzen und IR-härtbaren Harzen.

**7.** Glasscheibe nach einem der vorhergehenden Ansprüche, wobei das Harz der zweiten Schicht mindestens ein Material der Gruppe bestehend aus UV-Medien, Polyesterharzen, Alkyden, Acryl, Acrylamid, Acryl-Styrol, Vinyl-Acryl, Urethan, Polyurethan, Polyester, Urethanalkyden, Aminoharzen, Polyamid, Epoxy, Epoxyester, phenolischen Harzen, Silikonharzen, PVC, PVB und Harzen auf Wasserbasis umfasst.

**8.** Glasscheibe nach einem der vorhergehenden Ansprüche, wobei die Dicke der ersten entweder UV- oder IR-härtbaren Schicht nach dem Trocknen und vor der Wärmebehandlung im Bereich von 5 bis 120 $\mu$m liegt.

**9.** Glasscheibe nach einem der vorhergehenden Ansprüche, wobei die Dicke der zweiten Schicht nach dem Trocknen und vor der Wärmebehandlung im Bereich von 5 bis 50 $\mu$m liegt.

**10.** Glasscheibe nach einem der vorhergehenden Ansprüche, wobei die erste Schicht sich über im Wesentlichen die gesamte Oberfläche der Glasscheibe erstreckt und im Wesentlichen über ihre gesamte Oberfläche von der zweiten Schicht bedeckt ist.

## Revendications

**1.** Plaque de verre sur une surface de laquelle est disposé un revêtement dans laquelle le revêtement comprend dans l'ordre à partir du verre une première couche comprenant de l'émail et une seconde couche comprenant une résine, la seconde couche comprenant de plus une fritte et étant en contact direct avec la première couche, la quantité de fritte dans cette seconde couche, avant traitement thermique, étant de 20 % à 60 % en poids.

**2.** Plaque de verre selon la revendication 1, dans laquelle la première couche est constituée essentiellement d'un émail.

**3.** Plaque de verre selon la revendication 1 ou la revendication 2, dans laquelle la première couche est en contact direct avec la plaque de verre.

**4.** Plaque de verre selon une quelconque revendication précédente, dans laquelle l'émail de la première couche comprend un milieu organique conçu pour être durci sous un rayonnement infrarouge.

**5.** Plaque de verre selon la revendication 1-4, dans laquelle la seconde couche est constituée essentiellement de la résine et d'une fritte.

**6.** Plaque de verre selon une quelconque revendication précédente, dans laquelle la résine de la seconde couche est choisie dans le groupe constitué par les résines durcissables aux UV et les résines durcissables aux IR.

**7.** Plaque de verre selon une quelconque revendication précédente, dans laquelle la résine de la seconde couche comprend au moins une matière du groupe constitué par les milieux UV, les résines de polyester, les alkydes, une résine acrylique, l'acrylamide, une résine acrylique-styrène, une résine vinylique-acrylique, un uréthane, un polyuréthane, un polyester, les alkydes modifiées par uréthane, les résines aminiques, un polyamide, une résine époxy, une résine époxy-ester, les résines phénoliques, les résines de silicone, le PVC, le PVB et les résines à base d'eau.

**8.** Plaque de verre selon une quelconque revendication précédente, dans laquelle l'épaisseur de la première couche durcissable soit aux UV soit aux IR, une fois séchée et avant traitement thermique, est dans la plage de 5 à 120 $\mu$m.

**9.** Plaque de verre selon une quelconque revendication précédente, dans laquelle l'épaisseur de la seconde couche, une fois séchée et avant traitement thermique, est dans la plage de 5 à 50 $\mu$m.

**10.** Plaque de verre selon une quelconque revendication précédente, dans laquelle la première couche s'étend sur sensiblement toute la surface de la plaque de verre et est recouverte sensiblement sur toute sa surface par la seconde couche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 20315625 U1